# EUROPÄISCHE PATENTSCHRIFT

(11) **EP 3 080 042 B1**
(45) Veröffentlichungstag und Bekanntmachung des Hinweises auf die Patenterteilung: **28.11.2018**
(21) Anmeldenummer: 15705548.4
(22) Anmeldetag: 09.02.2015
(51) Int. Cl.: C01B 9/02, C01D 3/04, C01D 15/04, C01F 5/32, C01G 9/04, C25C 1/00, C25C 7/00, C25B 1/26, C25B 9/00

(54) **UMWANDLUNG VON METALLCARBONAT IN METALLCHLORID**
CONVERSION OF METAL CARBONATE TO METAL CHLORIDE
CONVERSION DE CARBONATE DE MÉTAL EN CHLORURE DE MÉTAL

(30) Priorität: 13.02.2014 DE 102014202593
(43) Veröffentlichungstag der Anmeldung: 19.10.2016
(73) Patentinhaber: Siemens Aktiengesellschaft, 80333 München (DE)
(72) Erfinder: ECKERT, Helmut, 91341 Röttenbach (DE); SCHIEMANN, Martin, 44575 Castrop-Rauxel (DE); SCHMID, Günter, 91334 Hemhofen (DE); TAROATA, Dan, 91054 Erlangen (DE); SCHERER, Viktor, 44805 Bochum (DE); FISCHER, Peter Heinz, 44139 Dortmund (DE); KELLERMANN, Renate Elena, 91052 Erlangen (DE)
(86) Internationale Anmeldenummer: PCT/EP2015/052621
(87) Internationale Veröffentlichungsnummer: WO 2015/121192

(56) Entgegenhaltungen:
- WO-A1-2014/005878
- GB-A- 561 651
- JP-A- H02 243 510
- US-A- 5 089 094
- US-A1- 2010 051 470

## Beschreibung

Die vorliegende Erfindung betrifft ein Verfahren zur Herstellung von Metallchlorid M^{x+}Clₓ⁻, bei dem Metallcarbonat als Feststoff mit einem Chlorierungsmittel zu Metallchlorid M^{x+}Clₓ⁻ umgesetzt wird, wobei das Metall M ausgewählt ist aus der Gruppe der Alkalimetalle, Erdalkalimetalle, Al und Zn, bevorzugt Li und Mg, besonders bevorzugt Li, und x der Wertigkeit des Metallkations entspricht, wobei als Edukt zusätzlich Metall M zugesetzt wird, sowie eine Vorrichtung zur Durchführung des Verfahrens.

In WO2012/038330 und WO2013/156476 wird beschrieben, wie Rauchgase/Abgase mit den elektropositiven Metallen Lithium oder Magnesium behandelt werden können, um Wertstoffe und hochgradige thermische Energie zu erhalten und dadurch die Verschmutzung der Atmosphäre zu reduzieren.

In WO2012/038330 wird demonstriert, dass CO₂ mit Lithium zu Wertstoffen wie Kohlenstoffmonoxid oder Acetylen reagiert, welche weiter zu Methanol oder anderen Wertstoffen umgesetzt werden können. Die freigesetzte thermische Energie kann dazu benutzt werden, die Methanol-CO₂-Trennung oder sogar einen Dampferzeuger anzutreiben.

Hierbei sind folgende Reaktionen und Betrachtungen von Relevanz:

2Li + CO₂ → Li₂O + CO - 314,9 kJ/mol (Vergleich: C + O₂ → CO₂ - 393, 5 kJ/mol)

4Li + CO₂ → 2Li₂O + C - 803,94 kJ/mol

C + CO₂ → 2CO + 172,5 kJ/mol;

welches zu Methanol umgesetzt werden kann

2C + 2Li → Li₂C₂;

welches zu Acetylen umgesetzt werden kann (Verhältnis CO₂ : Li)

Li₂CO₃ + 4C → Li₂C₂ + 3CO

Li₂O + CO₂ → Li₂CO₃; Li₂CO₃ → Li₂O + CO₂

bei den relevanten Temperaturen um 1500°C

Bildungsenthalpien (298K): Li₂O = - 597,90 kJ/mol;

Li₂CO₃ = - 1215,87 kJ/mol.

2Li + 2CO₂ → Li₂CO₃ + CO - 539 kJ

Nach einer Hydrolyse wird eine stark alkalische Li₂CO₃ Suspension erhalten.

Li₂C₂ + H₂O → HC=CH + 2LiOH

Li₂O + CO₂ → Li₂CO₃

In WO2013/156476 wird dargestellt, dass die Behandlungen von Rauchgas/Abgas aufgrund der hohen Löslichkeit von Lithium-Schwefel-basierten Salzen und der geringen Löslichkeit von Lithiumcarbonat auch eine Desulfurierung beinhalten kann:

6Li + SO₂ → Li₂S + 2Li₂O

8Li + SO₃ → Li₂S + 3Li₂O

Li₂O + SO₂ → Li₂SO₃ - 438, 7 kJ/mol

Die nach der Verbrennung von CO₂ und SO₂ mit einer erzwungenen Oxidation erhaltene Suspension, welche Li₂CO₃ und Li₂SO₄ enthält, muss dann getrennt werden. Glücklicherweise sind alle Lithium-Schwefel-Salze gut löslich in Wasser (z.B. Lithiumsulfat mit 350 g/l bei Raumtemperatur (ca. 25°C)). Im Gegensatz zu Na₂S₂O₅ sind Li₂S₂O₅ oder Li₂SO₃ auch gut löslich. Dies bedeutet, dass alle Schwefelverbindungen in Lösung verbleiben, wohingegen Li₂CO₃ (Löslichkeit 13 g/l) als Niederschlag gebildet wird und als ein ziemlich reines Produkt zur Rückführung erhalten werden kann (s. WO2010/000681). Die gute Löslichkeit von Lithiumsulfat steht hierbei im Gegensatz zu der von CaSO₄ (2g/l), welches in einem Entschwefelungsprozess des Stands der Technik hergestellt wird.

All diese Prozesssequenzen enden mit einem leicht nassen, ziemlich reinen Lithiumcarbonat. Die Reduktion von Lithiumcarbonat zu metallischem Lithium kann beispielsweise durch Umsetzung des Carbonats zum Chlorid und der sich anschließenden Elektrolyse einer eutektischen Mischung von Kalium /Lithiumchlorid erzielt werden.

1. Li₂CO₃ + 2HCl → 2LiCl + H₂O + CO₂ (Reaktionsenthalpie: - 96 kJ/mol)

2. Li₂CO₃ + Cl₂ → 2LiCl + 1/2O₂ + CO₂ (Reaktionsenthalpie: ∼ 5 kJ/mol)

Üblicherweise wird bei Verfahren zur Herstellung von Lithiumchlorid für die Lithiumherstellung entweder Lithiumcarbonat oder Lithiumhydroxyd mit Chlorwasserstoffsäure/Salzsäure in einer wässrigen Lösung reagieren gelassen. Nach Abdampfen und Kristallisation werden die Kristalle isoliert und getrocknet, um ein sehr hygroskopisches wasserfreies Lithiumchlorid zu erhalten, wie in Jürgen Deberitz, Lithium, Die Bibliothek der Wissenschaft Vol. 2, pp. 37, 2006 (ISBN-13: 978-3-937889-36-8) beschrieben ist. Eine größere Schwierigkeit stellt in einem solchen Prozess, wie in

US 6,048,507 dargestellt, der hohe Energiebedarf von theoretisch 30 x 10³ kJ/kg dar. Bisher wurde der Energiequelle, die für die chemische Umwandlung verwendet wird, keinerlei Beachtung geschenkt.

Ein weiteres Verfahren, welches in CA 2340528 A1 und
US 20130001097 A1 beschrieben ist, besteht darin, Lithiumcarbonat mit Chlorgas reagieren zu lassen, um wasserfreies Lithiumchlorid zu erhalten. Die Herstellung von wasserfreiem Lithiumchlorid aus pulverförmigem Lithiumcarbonat in einem Fließbettreaktor ist in WO2014/005878 beschrieben.

Es besteht weiterhin ein Bedarf an einem verbesserten Verfahren zur Herstellung von Metallchlorid aus Metallcarbonat, insbesondere auch aus energetischer Sicht.

Es wurde nunmehr gefunden, dass eine effiziente Herstellung, insbesondere auch aus energetischer Sicht, von Metallchlorid aus Metallcarbonat, also z.B. eine direkte Chlorierung von Lithiumcarbonat durch ein Chlorierungsmittel, dadurch möglich wird, dass man bei der Herstellung zusätzlich Metall M zudosiert, welches Energie für den Prozess liefert. Durch die Zudosierung des Metalls M können zudem Kontaminationen und aufwändige Dehydratisierungsschritte vermieden werden.

Zudem wurde erfindungsgemäß eine effiziente Sequenz an chemischen Reaktionen gefunden, um Metallchlorid und schlussendlich Metall aus Lithiumcarbonat herzustellen.

Gemäß einem Aspekt betrifft die vorliegende Erfindung ein Verfahren zur Herstellung von Metallchlorid M^{x+}Clₓ⁻, bei dem Metallcarbonat als Feststoff mit einem Chlorierungsmittel zu Metallchlorid M^{x+}Clₓ⁻ umgesetzt wird, wobei das Metall M ausgewählt ist aus der Gruppe der Alkalimetalle, Erdalkalimetalle, Al und Zn, bevorzugt Li und Mg, besonders bevorzugt Li, und x der Wertigkeit des Metallkations entspricht, wobei als Edukt zusätzlich Metall M zugesetzt wird. Gemäß bestimmten Ausführungsformen kann hierbei das Metall M auch ein Metall sein, das sich vom Metallion des Metallcarbonats unterscheidet. So können beispielsweise bei der Verwendung von Lithiumcarbonat als Metallcarbonat Lithium, Natrium, Kalium, Calcium und/oder Magnesium zugegeben werden. Generell kann ein solches Metall zugegeben, welches später bei der Elektrolyse des Metallchlorids nicht schadet. Gemäß bestimmten Ausführungsformen kann ein solches Metall, welches verschieden von dem des Metallcarbonats ist, auch vorteilhaft sein, wenn beispielsweise ein eutektisches Gemisch für die Elektrolyse des Metallchlorids gebildet werden kann. Gemäß bestimmten Ausführungsformen entspricht das Metall M dem des Metallcarbonats.

Gemäß einem weiteren Aspekt betrifft die vorliegende Erfindung eine Vorrichtung zur Umsetzung von Metallcarbonat als Feststoff mit einem Chlorierungsmittel zu Metallchlorid M^{x+}Clₓ⁻, wobei das Metall M ausgewählt ist aus der Gruppe der Alkalimetalle, Erdalkalimetalle, Al und Zn, bevorzugt Li und Mg, besonders bevorzugt Li, und x der Wertigkeit des Metallkations entspricht, wobei als Edukt zusätzlich Metall M zugesetzt wird, umfassend
einen ersten Reaktor zur Umsetzung von Metallcarbonat und dem Chlorierungsmittel;
eine erste Zuführeinrichtung für Metallcarbonat, die dazu ausgebildet ist, Metallcarbonat als Feststoff in den ersten Reaktor einzubringen;
eine zweite Zuführeinrichtung für das Chlorierungsmittel, die dazu ausgebildet ist, das Chlorierungsmittel in den ersten Reaktor einzubringen;
eine erste Abführeinrichtung für Metallchlorid, die dazu ausgebildet ist, Metallchlorid aus dem ersten Reaktor zu entfernen; und
eine zweite Abführeinrichtung für gasförmige Produkte der Umsetzung von Metallchlorid und dem Chlorierungsmittel, die dazu ausgebildet ist, gasförmige Produkte der Umsetzung von Metallcarbonat und dem Chlorierungsmittel aus dem ersten Reaktor zu entfernen,
weiterhin umfassend eine dritte Zuführeinrichtung für Metall M, die dazu ausgebildet ist, Metall M in den ersten Reaktor einzubringen.

Weitere Aspekte der vorliegenden Erfindung sind den abhängigen Patentansprüchen und der detaillierten Beschreibung zu entnehmen.

### Beschreibung der Figuren

Die beiliegenden Zeichnungen sollen Ausführungsformen der vorliegenden Erfindung veranschaulichen und ein weiteres Verständnis dieser vermitteln. Im Zusammenhang mit der Beschreibung dienen sie der Erklärung von Konzepten und Prinzipien der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander dargestellt. Gleiche, funktionsgleiche und gleich wirkende Elemente, Merkmale und Komponenten sind in den Figuren der Zeichnungen, sofern nichts anderes ausgeführt ist, jeweils mit denselben Bezugszeichen versehen.
- Figur 1: zeigt schematisch einen Rostreaktor, der in einem erfindungsgemäßen Verfahren und einer erfindungsgemäßen Vorrichtung eingesetzt werden kann.
- Figur 2: zeigt schematisch eine Detailansicht eines Ausführungsbeispiels eines Rostreaktors, der in einem erfindungsgemäßen Verfahren und einer erfindungsgemäßen Vorrichtung eingesetzt werden kann.
- Figur 3: zeigt schematisch einen Zyklonreaktor, der in einem erfindungsgemäßen Verfahren und einer erfindungsgemäßen Vorrichtung verwendet werden kann.
- Figur 4: zeigt schematisch einen weiteren Zyklonreaktor, der in einem erfindungsgemäßen Verfahren und einer erfindungsgemäßen Vorrichtung verwendet werden kann.
- Figur 5: zeigt schematisch ein Ausführungsbeispiel der vorliegenden Erfindung.
- Figur 6: zeigt schematisch ein weiteres Ausführungsbeispiel der vorliegenden Erfindung.
- Figur 7: zeigt schematisch ein Ausführungsbeispiel der vorliegenden Erfindung, welches zusätzlich eine Elektrolyseeinrichtung umfasst.
- Figur 8: zeigt schematisch ein Ausführungsbeispiel der vorliegenden Erfindung, welches zusätzlich einen zweiten Reaktor umfasst.
- Figur 9: zeigt schematisch ein Ausführungsbeispiel der vorliegenden Erfindung, welches zusätzlich eine Elektrolyseeinrichtung und einen zweiten Reaktor umfasst.
- Figur 10: zeigt schematisch ein weiteres Ausführungsbeispiel der vorliegenden Erfindung, welches zusätzlich eine Elektrolyseeinrichtung und einen zweiten Reaktor umfasst.

### Detaillierte Beschreibung der Erfindung

Im Rahmen der Erfindung wird darauf hingewiesen, dass die beispielhaft dargestellten Gleichungen Summengleichungen darstellen und die ablaufenden chemischen Prozesse deutlich komplexer sein können.

Die vorliegende Erfindung betrifft in einem ersten Aspekt ein Verfahren zur Herstellung von Metallchlorid M^{x+}Clₓ⁻, bei dem Metallcarbonat als Feststoff mit einem Chlorierungsmittel zu Metallchlorid M^{x+}Clₓ⁻ umgesetzt wird, wobei als Edukt zusätzlich Metall M zugesetzt wird und x der Wertigkeit des Metallkations (z.B. 1 für Li, 2 für Mg, 3 für Al) entspricht. In einem solchen Verfahren ist das Metall M ausgewählt ist aus der Gruppe der Alkalimetalle, bevorzugt Li, Na, K, Rb, Cs, Erdalkalimetalle, bevorzugt Mg, Ca, Sr, Ba, Al und Zn. Gemäß bestimmten Ausführungsformen ist das Metall M Li oder Mg, und bevorzugt ist es Li. Auch Mischungen der Metalle M bzw. Metallcarbonate bzw. Metallchloride sind möglich. Durch den Zusatz an Metall M wird es erfindungsgemäß ermöglicht, die schwach endotherm oder schwach exotherm verlaufende Reaktion des Metallcarbonats mit dem Chlorierungsmittel durch die exotherme Reaktion des Metalls M mit dem Chlorierungsmittel zu unterstützen, so dass durch die durch diese Reaktion eingebrachte thermische Energie auch die Reaktion des Metallcarbonats mit dem Chlorierungsmittel getragen wird.

Gemäß bestimmten Ausführungsformen wird hierbei keine zusätzliche thermische Energie in die Reaktion eingetragen, beispielsweise durch Heizvorrichtungen, und in bestimmten Ausführungsformen kann auch thermische Energie aus dem Verfahren gewonnen werden, welche dann beispielsweise zur Erzeugung von Dampf zum Antreiben von Dampfgeneratoren und/oder für ein Anwärmen des Metallcarbonats und/oder des Chlorierungsmittels und/oder des Metalls M verwendet werden kann.

Gemäß bestimmten Ausführungsformen kann das zusätzlich zugegebene Metall M auch ein Metall sein, das sich vom Metallion des Metallcarbonats unterscheidet. So können beispielsweise bei der Verwendung von Lithiumcarbonat als Metallcarbonat Lithium, Natrium, Kalium, Calcium und/oder Magnesium zugegeben werden. Generell kann ein solches Metall zugegeben, welches später bei der Elektrolyse des Metallchlorids nicht schadet. Gemäß bestimmten Ausführungsformen kann ein solches Metall, welches verschieden von dem des Metallcarbonats ist, auch vorteilhaft sein, wenn beispielsweise ein eutektisches Gemisch für die Elektrolyse des Metallchlorids gebildet werden kann. Gemäß bestimmten Ausführungsformen entspricht das Metall M dem des Metallcarbonats.

Gemäß bestimmten Ausführungsformen wird das Metall M in einem Gewichtsverhältnis Metall/Metallcarbonat von weniger als 5/10, bevorzugt weniger als 1/10 und besonders bevorzugt weniger als 0,5/10 zur Erzeugung thermischer Energie eingesetzt. Gemäß bestimmten Ausführungsformen wird das Gewichtsverhältnis Metall/Metallcarbonat so eingestellt, dass die Reaktion im erfindungsgemäßen Verfahren durch die erzeugte thermische Energie von allein getragen wird, ohne dass jedoch exzessiv Überschussenergie erzeugt wird, die dann durch beispielsweise Kühlen und Erzeugung von Dampf zum Antreiben von Dampfgeneratoren und/oder für ein Anwärmen des Metallcarbonats und/oder des Chlorierungsmittels und/oder des Metalls M verwendet wird, da hierbei inhärent Verluste auftreten. Wenn jedoch genügend Metall M vorhanden ist, welches beispielsweise durch Elektrolyse eines Metallchlorids unter Verwendung von Überschussenergie aus erneuerbaren Energien erzeugt wird, kann auch ein höherer Anteil an Metall M zugesetzt werden, beispielsweise zu Zeiten, an denen keine Überschussenergie aus erneuerbaren Energien vorhanden ist, so dass dann aus der im erfindungsgemäßen Verfahren erzeugten thermischen Energie Strom erzeugt werden kann. In solch einem Fall stellt dann das Metall M eine Art Energiespeicher dar, der unter Verwendung von Überschussenergie aus erneuerbaren Energien erzeugt wird und dann die Energie abgibt, wenn diese benötigt wird.

Gemäß bestimmten Ausführungsformen kann das Metall M im erfindungsgemäßen Verfahren zusammen mit dem Metallcarbonat eingesetzt werden. Auf diese Weise kann somit das Verfahren vereinfacht werden und somit auch die Vorrichtung zum Durchführen des Verfahrens. Bei einer Zuführung von Metall M und Metallcarbonat durch eine Öffnung in den ersten Reaktor kann auch ermöglicht werden, dass die Erzeugung an thermischer Energie aus der Reaktion von M mit dem Chlorierungsmittel an der Stelle erfolgt, an der diese für die Reaktion des Metallcarbonats mit dem Chlorierungsmittel benötigt wird. Durch ein Vermischen von Metall M und Metallcarbonat kann diese Erzeugung thermischer Energie gegebenenfalls geeignet optimiert werden. Das Metall M kann in verschiedenen Formen eingesetzt werden, beispielsweise als Feststoff, etwa in Form von Partikeln, und/oder als Flüssigkeit in Form einer Schmelze, wobei es im Falle von Partikeln oder Flüssigkeit auch zerstäubt werden kann.

Im erfindungsgemäßen Verfahren ist das Chlorierungsmittel nicht besonders beschränkt, solange eine Erzeugung von Metallchlorid gewährleistet wird, also Chlor bzw. Chlorradikale vom Chlorierungsmittel freigesetzt werden, und es kann gasförmig, flüssig bzw. als Lösung in einem geeigneten Lösungsmittel oder als Feststoff zugesetzt werden, wird bevorzugt jedoch gasförmig, flüssig oder als Feststoff, besonders bevorzugt gasförmig zugesetzt. Gemäß bestimmten Ausführungsformen wird als Chlorierungsmittel Chlor, Oxalylchlorid, Phosgen, Diphosgen, oder Triphosgen, bevorzugt Chlor oder Oxalylchlorid, besonders bevorzugt Chlor verwendet. Gemäß bestimmten Ausführungsformen ist das Chlorierungsmittel nicht Phosgen, Diphosgen und/oder Triphosgen. Es können auch Gemische von Chlorierungsmitteln verwendet werden. Auch kann beispielsweise Kohlenmonoxid als Reagenz bzw. Katalysator zugesetzt werden.

Gemäß bestimmten Ausführungsformen findet eine trockene Umwandlung/Umsetzung von Metallcarbonat, Metall M und Chlorierungsmittel statt, d.h. es wird kein Lösungsmittel verwendet, und bevorzugt werden nur Metallcarbonat, Metall M und Chlorierungsmittel in den ersten Reaktor eingeführt und umgesetzt.

Des Weiteren werden gemäß bestimmten Ausführungsformen keine weiteren Stoffe in den Kreislauf eingeführt, die anschließend wieder abgetrennt werden müssen.

Bei der Umsetzung des Metallcarbonats und des Metalls M mit dem Chlorierungsmittel können gasförmige Produkte anfallen, wie beispielsweise CO₂, O₂, CO, etc. Diese können, beispielsweise über eine Abführeinrichtung, in die Atmosphäre abgelassen und/oder als Wertprodukte gespeichert und/oder weiter reagieren gelassen werden. So kann beispielsweise CO mit Wasserstoff zu Alkanen, Alkenen, Alkoholen, etc. umgesetzt werden.

In bestimmten Ausführungsformen wird das Metallchlorid im Anschluss an die Umsetzung von Metallcarbonat und Metall M mit dem Chlorierungsmittel wieder zu Metall M umgesetzt, bevorzugt durch Elektrolyse. Die Umsetzung kann neben der Elektrolyse auch auf andere geeignete Weise erfolgen.

Die bevorzugte Elektrolyse ist hier nicht besonders beschränkt und kann beispielsweise eine Schmelzflusselektrolyse einer Verbindung der Formel M^{x+}Clₓ⁻ oder eine Elektrolyse einer wässrigen Lösung der Verbindung der Formel M^{x+}Clₓ⁻ umfassen.

Bei Verwendung einer Schmelzflusselektrolyse des Metallchlorids der Formel M^{x+}Clₓ⁻ ergibt sich der Vorteil, dass eine höhere Effizienz erzielt wird und zudem kein Wasserstoff als Nebenprodukt anfällt, der gegebenenfalls unerwünscht ist. Andererseits kann, wenn die Elektrolyse durch Elektrolyse einer wässrigen Lösung der Verbindung der Formel M^{x+}Clₓ⁻ unter Entstehen von Wasserstoff erfolgt, dieser Wasserstoff beispielsweise als Wertprodukt verwendet werden oder gemäß bestimmten Ausführungsformen mit dem bei der Umsetzung von Metallcarbonat, Metall M und Chlorierungsmittel erzeugten Kohlenstoffmonoxid zu weiteren chemischen Produkten umgesetzt werden, wie zu Alkanen, Alkenen, Alkoholen, etc.

Um eine effizientere Elektrolyse bei beispielsweise niedrigeren Temperaturen zu erreichen, kann zur Schmelzpunkterniedrigung beispielsweise ein eutektisches Salzgemisch mit der Verbindung der Formel M^{x+}Clₓ⁻ durch Zugabe geeigneter Zusätze erzeugt werden, welches dann elektrolysiert wird. Hierbei kann es jedoch nachteilig sein, dass das Metall M als Gemisch mit weiteren Metallen anfällt und somit ggf. von diesen abgetrennt werden muss. Bei Verwendung von beispielsweise Li als Metall M kann dieses bei der Elektrolyse von LiCl beispielsweise später als schwerlösliches Lithiumcarbonat abgetrennt werden, so dass ein solcher Nachteil nicht zwangsläufig entsteht.

In bestimmten Ausführungsformen kann bei der erfindungsgemäßen Umsetzung von Metallcarbonat und Metall M mit dem Chlorierungsmittel zusätzliche thermische Energie gewonnen werden, die gegebenenfalls in elektrische Energie und/oder zur Vorwärmung von Metall M und/oder Metallcarbonat und/oder dem Chlorierungsmittel verwendet werden kann. Auch kann die elektrische Energie zur Elektrolyse von Metallchlorid, wie oben dargestellt, verwendet werden. Gemäß bevorzugter Ausführungsformen wird die Energie zur elektrolytischen Umsetzung von M^{x+}Clₓ⁻ zu M und Cl₂ im Wesentlichen aus Überschussenergie, beispielsweise aus erneuerbaren Energien, oder aus konventionellen Energiequellen, bereitgestellt, also beispielsweise zu mehr als 30%, bevorzugt mehr als 70%, weiter bevorzugt mehr als 80% und besonders bevorzugt mehr als 90%, bezogen auf den Energiebedarf der Elektrolyse. Überschussenergie aus erneuerbaren Energien steht hierzu beispielsweise dann zur Verfügung, wenn mehr Strom durch erneuerbare und/oder herkömmliche Energiequellen zur Verfügung gestellt wird, als von den Verbrauchern abgenommen wird. Insbesondere ist hiermit die Energie gemeint, die im Überschuss durch erneuerbare Energiequellen wie Solaranlagen, Windanlagen, Wasserkraftanlagen, geothermische Anlagen, Biokraftanlagen (Biomasse) oder ähnlichem bereitstellen und die nicht lokal, regional und/oder überregional zum Zeitpunkt der Erzeugung von Verbrauchern abgenommen werden kann. Es ist hierbei nicht ausgeschlossen, dass Energie auch aus anderen Quellen bezogen wird, beispielsweise aus herkömmlichen Stromquellen und/oder aus der oben erzeugten Energie bei der Umsetzung von Metallcarbonat und Metall M mit dem Chlorierungsmittel. Gemäß besonders bevorzugten Ausführungsformen wird die Energie, die zur Elektrolyse der Verbindung der Formel M^{x+}Clₓ⁻ verwendet wird, zu 100% aus erneuerbaren Energiequellen bezogen, wobei zum Betreiben der Elektrolyseeinrichtung auch Energie, die nicht direkt mit der Elektrolyse der Verbindung der Formel M^{x+}Clₓ⁻ in Verbindung steht, wie beispielsweise zu Beleuchtungszwecken oder zum Betrieb von Pumpen, etc. auch aus anderen Energiequellen stammen kann, aber auch aus erneuerbaren Energiequellen.

Gemäß bestimmten Ausführungsformen wird das erzeugte Metall M zumindest teilweise, beispielsweise zu mehr als 20 Gew.%, mehr als 50 Gew.%, oder mehr als 80 Gew.%, mehr als 90 Gew.% oder mehr als 95 Gew.% mit Kohlendioxid zu Metallcarbonat umgesetzt, so dass ein Metallkreislauf entsteht. Auch eine vollständige Umsetzung (100 Gew.%) des erzeugten Metalls M mit Kohlendioxid zu Metallcarbonat ist denkbar. Dies kann beispielsweise von der Nachfrage an dem Metall M auf dem Markt bzw. auch der Verfügbarkeit an Energie, beispielsweise Überschussenergie aus erneuerbaren Energien, abhängen. Alternativ kann das Metall M auch nach einer ersten anderweitigen Umsetzung mit Kohlendioxid zu Metallcarbonat umgesetzt werden, beispielsweise indem zunächst Metallnitrid hergestellt wird, welches dann nach Hydrolyse mit Kohlendioxid zu Metallcarbonat reagiert. Auch können sowohl eine direkte Umsetzung des Metalls M mit Kohlendioxid als auch eine erste anderweitige Umsetzung des Metalls M, beispielsweise mit Stickstoff, und anschließende Reaktion mit Kohlendioxid stattfinden, wobei auch hier mehr als 20 Gew.%, mehr als 50 Gew.%, oder mehr als 80 Gew.%, mehr als 90 Gew.% oder mehr als 95 Gew.% des Metalls M umgesetzt werden können. Auch hier ist eine vollständige Umsetzung (100 Gew.%) des erzeugten Metalls M zu Metallcarbonat denkbar.

In einem solchen Metallkreislauf können die einzelnen Schritte, also die Umsetzung von Metallcarbonat und Metall M mit dem Chlorierungsmittel, die Umsetzung des Metallchlorids zu Metall M und Chlor sowie die Umsetzung des Metalls M mit Kohlendioxid auch zu verschiedenen Zeitpunkten, beispielsweise an verschiedenen Tagen, Monaten oder Jahreszeiten, beispielsweise je nach Verfügbarkeit an Überschussenergie aus erneuerbaren Energien, wie auch an verschiedenen Orten stattfinden, wobei die einzelnen erzeugten Verbindungen, Metallchlorid, Metall M und Metallcarbonat hier dann auf geeignete Weise, beispielsweise mit Bahn, LKWs, Schiffen, Förderbändern, Rohren, etc. zu den einzelnen Orten transportiert und dort oder am Erzeugungsort ggf. auch gelagert werden können. Auch kann aus dem erzeugten Chlor wieder das Chlorierungsmittel erzeugt bzw. Chlor als Chlorierungsmittel verwendet werden und somit gelagert oder transportiert werden.

Das Verfahren sowie eine Vorrichtung zur Erzeugung des Metallcarbonats aus Metall M und Kohlendioxid sind nicht besonders beschränkt und können beispielsweise eine Verbrennung des Metalls M, ggf. unter Schmelzen und/oder Vorheizen des Metalls M, in einer kohlendioxidhaltigen Atmosphäre, ggf. unter Zündung des Metalls M umfassen, wobei auch hier für die einzelnen Vorgänge, welche Energie erfordern, beispielsweise Überschussenergie aus erneuerbaren Energien, aber auch ggf. Energie aus einer exothermen Verbrennung des Metalls M mit dem Kohlendioxid verwendet werden kann. Auch können bei der Umsetzung von Metall M und Kohlendioxid bzw. kohlendioxidhaltiger Atmosphäre, welche auch beispielsweise Luft, Stickstoff, etc. umfassen kann, verschiedene, ggf. gasförmige Wertprodukte wie Acetylen, CO, Wasserstoff, Sauerstoff, Ammoniak, etc. anfallen, die noch weiter umgesetzt oder als solche gespeichert und/oder verwendet werden können. Hierbei kann es auch möglich sein, dass das Metallcarbonat in einer Mischung mit weiteren Feststoffen anfällt, von denen es ggf. abgetrennt werden kann.

Gemäß bestimmten Ausführungsformen findet die Umsetzung von Metallcarbonat und Metall M mit dem Chlorierungsmittel in einem Rostreaktor oder einem mechanisch bewegten Festbettreaktor oder in einem Zyklon-Reaktor statt.

Der Rostreaktor, der mechanisch bewegte Festbettreaktor und der Zyklon-Reaktor sind hierbei erfindungsgemäß nicht besonders beschränkt.

Gemäß bestimmten Ausführungsformen erfolgt die Umsetzung in einem Rostreaktor, bei dem das Chlorierungsmittel als Gas im Gleichstrom mit dem Metallcarbonat zugegeben wird und/oder das Chlorierungsmittel vorgewärmt wird.

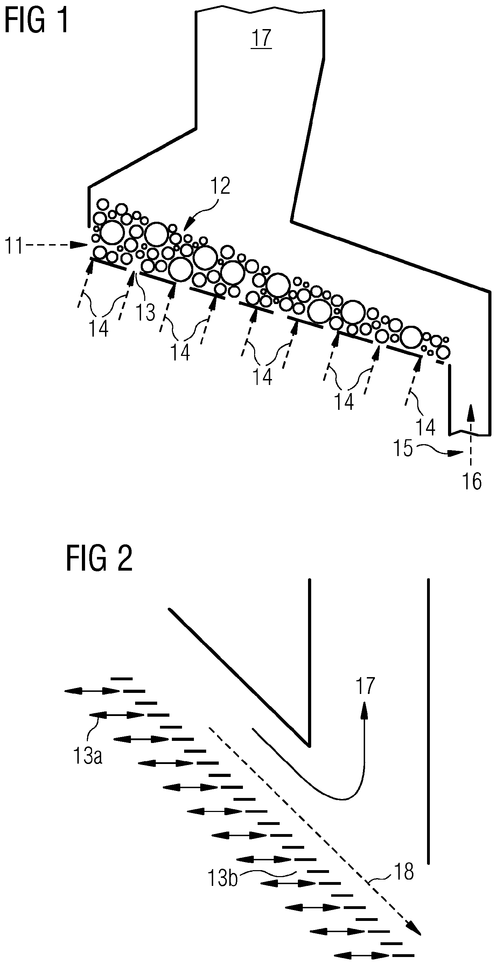

Ein beispielhafter Rostreaktor ist in Figur 1 dargestellt. Über eine Zuführeinrichtung 11 für Metallcarbonat und Metall M werden das Metallcarbonat und das Metall M in den Rostreaktor eingebracht, so dass auf dem Rost 13 ein Metallcarbonat/Metall-Bett 12 entsteht, wobei die Zufuhr von Metallcarbonat und Metall M auch durch getrennte Öffnungen bzw. Zuführeinrichtungen erfolgen kann. Durch den Rost 13 erfolgt die Zufuhr 14 für das Chlorierungsmittel. Wie in Figur 1 dargestellt kann die Zufuhr 14 des Chlorierungsmittels über den gesamten Rost 13 erfolgen, es ist jedoch nicht ausgeschlossen, dass die Zufuhr 14 des Chlorierungsmittels auch nur in Teilbereichen des Rosts 13, beispielsweise nahe der Zuführeinrichtung 11 für Metallcarbonat und/oder Metall M erfolgt und/oder dass die Zufuhr 14 des Chlorierungsmittels mit unterschiedlichen Stoffmengen bzw. Massen bzw. Volumina an verschiedenen Stellen des Rosts 13 erfolgt. Auch kann das zugeführte Chlorierungsmittel gemäß bestimmten Ausführungsformen vor der Zufuhr 14 erwärmt werden, beispielweise über eine Heizvorrichtung und/oder durch erwärmtes Abgas und/oder erwärmten Feststoff und/oder erwärmte Flüssigkeit im erfindungsgemäßen Prozess. Am Ende kann der umgesetzte und/oder ggf. nicht umgesetzte Feststoff über eine Abführeinrichtung 15 für Feststoff umfassend Metallchlorid abgeführt werden, beispielweise durch einen Fallschacht 16. Gasförmige Produkte der Umsetzung des Metallcarbonats und des Chlorierungsmittels können über eine Abführeinrichtung 17 für gasförmige Produkte der Umsetzung von Metallcarbonat und dem Chlorierungsmittel abgeführt werden.

Roste sind, um Feststoffe bei langen Aufenthaltszeiten umzuwandeln, etabliert, und ein Beispiel dafür sind Rostfeuerungen, wie sie in Loo, Sjaak van; Koppejan, Jaap: Handbook of Biomass Combustion. London: Earthscan, S. 134 - 144, 2008 beispielhaft dargestellt sind. Das Prinzip der Rostfeuerung ist wohlbekannt und weit entwickelt. Wie auch in Figur 1 beispielhaft gezeigt, kann ein an der Reaktion beteiligter Feststoff am oberen Ende des Rostes 13 zugeführt werden.

Da der Feststoff über den Rost 13 aus dem Reaktionsraum transportiert werden muss, um einen kontinuierlichen Betrieb des Reaktors zu gewährleisten, besteht der Rost gemäß bestimmten Ausführungsformen aus beweglichen Teilen, die den Transport des Feststoffes ermöglichen. In Figur 2 ist das Prinzip eines beispielhaften Vorschubrostes für diesen Transport skizziert. Bei diesem ist der Rost 13 aus einzelnen Stäben 13a, 13b aufgebaut, von denen beispielhaft jeder zweite Stab 13a horizontal beweglich ist, wohingegen die anderen Stäbe 13b fest sind. Dadurch können sowohl Transport als auch Schürung des Feststoffs effizient gewährleistet werden. Dabei können alle beweglichen Stäbe beispielsweise einen gemeinsamen Antrieb besitzen und dadurch phasengleich bewegt werden.

Eine andere Option besteht darin, die Stäbe in Gruppen einzuteilen oder sogar einzeln anzusteuern, wodurch der Umsetzungsprozess sehr genau kontrolliert und eine vollständige Reaktion gewährleistet werden kann, wie in DE 10137520 A1 dargestellt ist. Ein angepasstes Bewegungsmuster der Roststäbe kann eine Kontrolle und Vergleichsmäßigung der Schichtdicke des auf dem Rost liegenden Brennstoffs/Feststoffs als Feststoffstrom 18 ermöglichen. In Verbindung mit der beispielhaften Prozessgaszuführung umfassend das Chlorierungsmittel von der Unterseite des Rostes (Unterwind) wird somit eine homogene Durchströmung des Feststoffbettes erzielt, wobei das Prozessgas aber auch anders zugeführt werden kann. Die dargestellte Variante mit der Durchströmung von der Unterseite kann neben der gleichmäßigen Umsetzung des Feststoffs zu einer Minimierung des Staubaustrags führen. Um sowohl eine gleichmäßige vollständige Umsetzung als auch einen geringen Staubaustrag zu gewährleisten, kann gemäß bestimmten Ausführungsformen die Schichtdicke überwacht werden, beispielsweise mit entsprechenden Sensoren und/oder Kameras, und/oder es kann eine kontrollierte Zuführung des Chlorierungsmittels über den gesamten Bettbereich erfolgen.

In Figur 2 ist zudem eine Abführung des beispielhaften umgesetzten Prozessgases über die Abführeinrichtung 17 im Co-Current dargestellt, welche beispielhaft erfolgen kann, wobei jedoch auch mehrere Abführeinrichtungen 17 vorgesehen sein können oder die Abführung des umgesetzten Prozessgases anders erfolgen kann. Die Abführung des überschüssigen, ggf. teilweise nicht umgesetzten Prozessgases erfolgt beispielsweise gemäß bestimmten Ausführungsformen am Ende des Feststoffaustrags aus der Reaktorkammer.

Ein beispielhafter Prozess der Umsetzung von Lithiumcarbonat und Lithium als Metallcarbonat und Metall M mit Chlor als Chlorierungsmittel in einem Rostreaktor ist im Folgenden dargestellt. Diese Reaktion ist sehr leicht endotherm. Hierbei wird zur Einbringung der für die Reaktion notwendigen Energie Lithium selbst, oder alternativ auch ein zum Gesamtprozess, insbesondere der Elektrolyse des Metallchlorids, kompatibles anderes Metall M, verwendet, um Kontamination und aufwändige Dehydratisierungschritte zu vermeiden. Die Enthalpie der LiCl Bildung, bzw. der Bildung eines entsprechenden Metallchlorids, ist so hoch (-409 kJ/mol für LiCl), dass nur 1-2 Prozent von beispielsweise elektrolytisch hergestelltem Lithium in die Wiederaufarbeitung investiert werden müssen, um diesen wichtigen Schritt zu erreichen.

2Li + Cl₂ → 2LiCl (ΔHᵣ = -409 kJ/mol)

Lithium kann in dem Reaktor beispielsweise in flüssiger, zerstäubter Form eingebracht werden (z.B. über festes Lithium, welches auf eine Temperatur > 180 °C beheizt und zerstäubt wird) oder in Form fester Lithium-Partikel beigemischt werden.

Da die Reaktion von Lithiumcarbonat und Chlor leicht endotherm ist, und aus Effizienzgründen nur eine geringe Zufuhr von Energieträgern notwendig sein sollte, sollte die Reaktion bevorzugt bei möglichst tiefer Temperatur ablaufen. Diese macht gemäß bestimmter Ausführungsformen eine lange Aufenthaltsdauer zur vollständigen Umwandlung des Li₂CO₃ zu LiCl notwendig. Verschiedene Reaktorkonzepte stehen zur Verfügung, die eine längere Aufenthaltsdauer eines Feststoffs in der Reaktionszone ermöglichen. Die zu berücksichtigenden Stoffe machen den Einsatz einer Rostanlage möglich.

Bei dem obigen Prozess, der nur durch Zugabe von reinem Lithium als Energieträger eine schwach exotherme Wärmetönung erfährt, folgt der Wärmestrom dem Li₂CO₃. Bei der Zugabe des reinen Lithiums am Rostanfang wird aufgrund des Konzentrationsgefälles eine vermehrte Wärmefreisetzung in diesem Bereich erfolgen. Durch eine Ausführung im Co-Current kann die in diesem Bereich nicht benötigte Wärme in weiter rostabwärts gelagerte Bereiche geführt werden. Weiterhin ist mit zunehmender Umwandlung auf dem Rost eine Abnahme der Reaktionsrate aufgrund abnehmender Li₂CO₃-Konzentration und Verbrauch des reinen Lithiums zu erwarten. Dies kann eine Vorwärmung des Prozessgases sinnvoll machen, die gemeinsam mit der Prozessgasführung im Gleichstrom zu einer Erwärmung des Feststoffbettes führt. Durch beide Maßnahmen, Prozessgasvorwärmung und Prozessgasführung im Gleichstrom, kann der abnehmenden Reaktionsrate entgegengewirkt und eine vollständige Umwandlung ermöglicht werden.

Gemäß weiteren bestimmten Ausführungsformen kann die Umsetzung in einem Zyklon-Reaktor erfolgen, der beheizt wird, und/oder bei dem das Metall M an verschiedenen Positionen im Reaktionsbereich eingebracht wird.

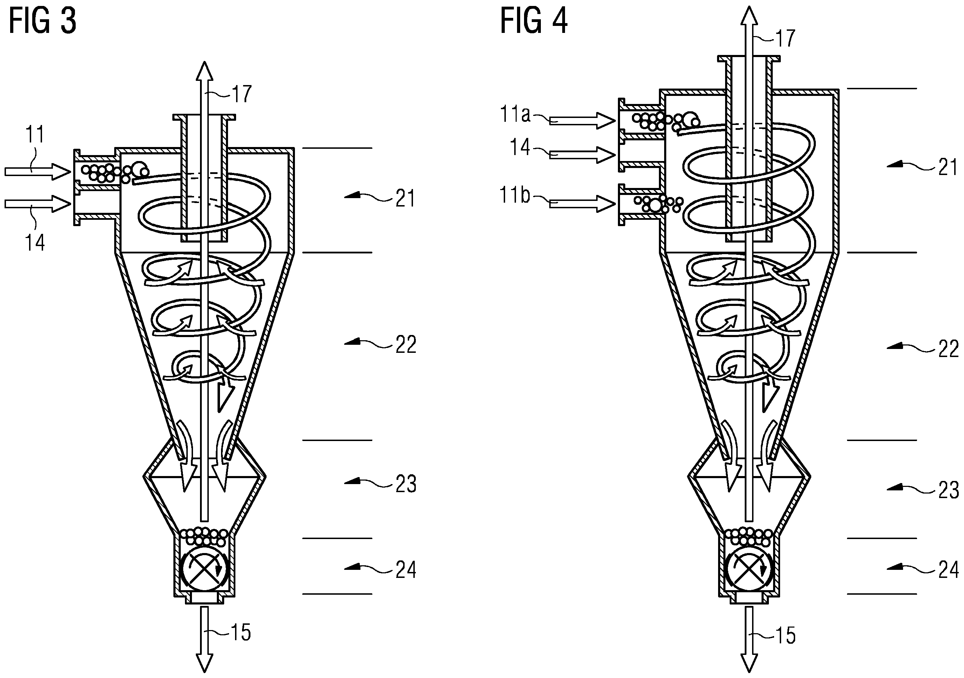

Beispielhafte Zyklon-Reaktoren sind in Figuren 3 und 4 dargestellt, wobei die Zyklon-Reaktoren in Figuren 3 und 4 großteils baugleicht sind, außer dass der in Figur 3 dargestellte Zyklonreaktor eine Zuführeinrichtung 11 für Metallcarbonat und Metall M umfasst, während der in Figur 4 dargestellte Zyklonreaktor eine separate Zuführeinrichtung 11a für Metallcarbonat und eine separate Zuführeinrichtung 11b für Metall M aufweist. Beide dargestellten Zyklon-Reaktoren weisen zudem eine Zufuhr 14 für das Chlorierungsmittel, eine Abführeinrichtung 15 für Feststoff umfassend Metallchlorid und eine Abführeinrichtung 17 für gasförmige Produkte der Umsetzung von Metallcarbonat und dem Chlorierungsmittelauf, wobei sie als Komponenten beispielhaft einen Reaktionsbereich 21, beispielsweise in Form eines rotationssymmetrischen Oberteils, einen Separationsbereich 22, der beispielsweise konisch ausgestaltet ist, wie in der Figur dargestellt, eine Entspannungskammer 23 und eine Zellenradschleuse 24 als Beispiel einer Abführvorrichtung für Feststoff umfassen, wie sie beispielsweise in einem Zyklonabscheider vorhanden sind. Der erfindungsgemäße Zyklon-Reaktor kann aber auch anders aufgebaut sein. Es können zudem auch mehrere Abführeinrichtungen 17 vorgesehen sein oder die Abführung des umgesetzten Prozessgases kann anders erfolgen. Auch kann der abgeführte Feststoff neben Metallchlorid andere Stoffe wie nicht umgesetzte Edukte oder anderes umfassen.

Beispielhaft kann ein Zyklon-Reaktor für die Umsetzung von Li₂CO₃ mit Chlorgas zu LiCl verwendet werden, beispielhaft in Form eines Zyklonabscheiders. Dabei werden das Lithiumcarbonat und das Chlorgas beispielsweise in ein rotationssymmetrisches Oberteil als Reaktionsbereich 21 tangential eingeblasen und so miteinander verwirbelt und in Rotation gebracht. Da die gewünschte Reaktion der beiden Produkte zu Lithiumchlorid endotherm ist, wird zusätzliche Reaktionsenergie benötigt. Diese kann durch dem Li₂CO₃ beigemischten Reinlithium bereitgestellt werden und ggf. zudem in Form von Wärmeenergie durch eine externe Heizquelle um den Reaktionsbereich. Hier ist die Enthalpie der LiCl Bildung so hoch (-409 kJ/mol), dass beispielsweise nur 1-2 Prozent von elektrolytisch hergestelltem Lithium in die Wiederaufarbeitung zurück investiert werden.

2Li + Cl₂ → 2LiCl (ΔHᵣ = -409 kJ/mol)

Das Lithium kann dabei z.B. entweder in fester Form, beispielsweise als Lithium-Partikel, oder als flüssiges, verdüstes Lithium in den Reaktor eingebracht werden. Zur besseren Steuerung des Reaktionsprozesses ist es denkbar, das Lithium an verschiedenen Positionen im Reaktionsbereich einzubringen, wie auch in Figur 4 dargestellt.

Durch die Schwerkraft und die Rotation laufen sowohl die festen (z.B. LiCl) als auch die gasförmigen Reaktionsprodukte (z.B. O₂, CO₂) auf einer Spiralbahn aus dem Reaktionsbereich 21 nach unten in den konischen Separationsbereich 22. Durch die Verjüngung im Separationsbereich 22 nimmt die Rotationsgeschwindigkeit immer mehr zu, sodass feste Partikel durch die Fliehkraft an die Wände geschleudert und dabei soweit abgebremst werden, dass sie sich aus der Strömung lösen und nach unten in die Entspannungskammer 23 fallen. Die dadurch separierten Gase können nun über ein mittiges Tauchrohr nach oben aus dem Reaktor abgezogen werden. Die in der Entspannungskammer 23 separierten Feststoffe können beispielsweise über eine Zellenradschleuse 24 während des Betriebes entnommen werden.

Die vorliegende Erfindung betrifft zudem eine Vorrichtung, in der das erfindungsgemäße Verfahren durchgeführt werden kann.

Gemäß einem Aspekt betrifft die vorliegende Erfindung eine Vorrichtung zur Umsetzung von Metallcarbonat als Feststoff mit einem Chlorierungsmittel zu Metallchlorid M^{x+}Clₓ⁻, wobei das Metall M ausgewählt ist aus der Gruppe der Alkalimetalle, Erdalkalimetalle, Al und Zn, bevorzugt Li und Mg, besonders bevorzugt Li, und x der Wertigkeit des Metallkations entspricht, wobei als Edukt zusätzlich Metall M zugesetzt wird, umfassend
einen ersten Reaktor zur Umsetzung von Metallcarbonat und dem Chlorierungsmittel;
eine erste Zuführeinrichtung für Metallcarbonat, die dazu ausgebildet ist, Metallcarbonat als Feststoff in den ersten Reaktor einzubringen;
eine zweite Zuführeinrichtung für das Chlorierungsmittel, die dazu ausgebildet ist, das Chlorierungsmittel in den ersten Reaktor einzubringen;
eine erste Abführeinrichtung für Metallchlorid, die dazu ausgebildet ist, Metallchlorid aus dem ersten Reaktor zu entfernen; und
eine zweite Abführeinrichtung für gasförmige Produkte der Umsetzung von Metallchlorid und dem Chlorierungsmittel, die dazu ausgebildet ist, gasförmige Produkte der Umsetzung von Metallcarbonat und dem Chlorierungsmittel aus dem ersten Reaktor zu entfernen,
weiterhin umfassend eine dritte Zuführeinrichtung für Metall M, die dazu ausgebildet ist, Metall M in den ersten Reaktor einzubringen.

Erfindungsgemäß ist gemäß bestimmten Ausführungsformen hierbei nicht ausgeschlossen, dass mit der ersten Abführeinrichtung für Metallchlorid neben dem Metallchlorid auch weitere Feststoffe oder andere Stoffe aus dem ersten Reaktor entfernt werden, beispielsweise auch nicht umgesetztes Metallcarbonat und/oder Metall M sowie weitere Umsetzungsprodukte von Metallcarbonat und/oder Metall M mit dem Chlorierungsmittel.

In bestimmten Ausführungsformen ist der erste Reaktor zur Umsetzung von Metallcarbonat und dem Chlorierungsmittel ein Rostreaktor oder ein mechanisch bewegter Festbettreaktor oder ein Zyklon-Reaktor. Zudem kann in der erfindungsgemäßen Vorrichtung die Zufuhr von Metall M und Metallcarbonat in den ersten Reaktor über eine gemeinsame Öffnung im ersten Reaktor erfolgen.

Gemäß bestimmten Ausführungsformen kann die erfindungsgemäße Vorrichtung weiterhin eine Elektrolyseeinrichtung für Metallchlorid umfassen, die dazu ausgebildet ist, Metallchlorid zu Metall M und Chlor zu elektrolysieren, eine vierte Zuführeinrichtung für Metallchlorid umfassen, die mit der ersten Abführeinrichtung für Metallchlorid verbunden und dazu ausgebildet ist, das Metallchlorid der Elektrolyseeinrichtung zuzuführen, eine dritte Abführeinrichtung für Metall M umfassen, die dazu ausgebildet ist, Metall M aus der Elektrolyseeinrichtung zu entfernen, und eine vierte Abführeinrichtung für Chlor umfassen, die dazu ausgebildet ist, Chlor aus der Elektrolyseeinrichtung zu entfernen. Auch kann beispielsweise eine zusätzliche Abführeinrichtung vorhanden sein, die dazu ausgebildet ist, weitere Umsetzungsprodukte der Elektrolyse von Metallchlorid, beispielsweise bei der Umsetzung einer Lösung von Metallchlorid, wobei hier zuvor ein Lösungsmittel wie Wasser, etc. zum Metallchlorid zugeführt wurde, aus der Elektrolyseeinrichtung abzuführen. Der Aufbau der Elektrolyseeinrichtung ist hierbei nicht besonders beschränkt und kann gewöhnlich verwendete Elektrolyseeinrichtungen, wie beispielsweise zur Schmelzflusselektrolyse oder zur Elektrolyse von Lösungen, bevorzugt zur Schmelzflusselektrolyse, umfassen.

Gemäß bestimmten Ausführungsformen ist nicht ausgeschlossen, dass mit der dritten Abführeinrichtung für Metall M neben dem Metall M auch andere Feststoffe oder andere Stoffe wie beispielsweise Schmelzhilfsstoffe, nicht umgesetztes Metallchlorid und/oder weitere Umsetzungsprodukte der Elektrolyse entfernt werden.

Die erfindungsgemäße Vorrichtung kann zudem bzw. außerdem gemäß bestimmten Ausführungsformen weiterhin einen zweiten Reaktor zur Umsetzung von Metall M mit Kohlendioxid zu Metallcarbonat umfassen, der dazu ausgebildet ist, Metall M mit Kohlendioxid umzusetzen, eine fünfte Zuführeinrichtung für Metall M umfassen, die dazu ausgebildet ist, Metall M dem zweiten Reaktor zuzuführen, eine sechste Zuführeinrichtung für Kohlendioxid umfassen, die dazu ausgebildet ist, Kohlendioxid dem zweiten Reaktor zuzuführen, eine fünfte Abführeinrichtung für Metallcarbonat umfassen, die mit der ersten Zuführeinrichtung verbunden ist und dazu ausgebildet ist, das Metallcarbonat aus dem zweiten Reaktor zu entfernen, und mindestens eine sechste Abführeinrichtung für die weiteren Produkte der Umsetzung von Metall M und Kohlendioxid umfassen, die dazu ausgebildet, die Produkte der Umsetzung von Metall M und Kohlendioxid aus dem zweiten Reaktor abzuführen. Hierbei können auch mehrere Abführeinrichtungen für die weiteren Produkte der Umsetzung von Metall M und Kohlendioxid umfasst sein. Der zweite Reaktor ist hierbei nicht besonders beschränkt und kann beispielsweise ein Verbrennungsreaktor sein.

Gemäß bestimmten Ausführungsformen ist nicht ausgeschlossen, dass mit der fünften Abführeinrichtung für Metallcarbonat neben dem Metallcarbonat auch andere Feststoffe oder andere Stoffe wie beispielsweise nicht umgesetztes Metall M und/oder weitere Umsetzungsprodukte der Umsetzung von Metall M und Kohlendioxid entfernt werden.

Gemäß bestimmten Ausführungsformen umfasst eine erfindungsgemäße Vorrichtung eine Elektrolyseeinrichtung für Metallchlorid, die dazu ausgebildet ist, Metallchlorid zu Metall M und Chlor zu elektrolysieren;
eine vierte Zuführeinrichtung von Metallchlorid, die mit der ersten Abführeinrichtung für Metallchlorid verbunden ist und dazu ausgebildet ist, das Metallchlorid der Elektrolyseeinrichtung zuzuführen;
eine dritte Abführeinrichtung für Metall M, die dazu ausgebildet ist, Metall M aus der Elektrolyseeinrichtung zu entfernen;
eine vierte Abführeinrichtung für Chlor, die dazu ausgebildet ist, Chlor aus der Elektrolyseeinrichtung zu entfernen; einen zweiten Reaktor zur Umsetzung von Metall M mit Kohlendioxid zu Metallcarbonat, der dazu ausgebildet ist, Metall M mit Kohlendioxid umzusetzen;
eine fünfte Zuführeinrichtung für Metall M, die dazu ausgebildet ist, Metall M dem zweiten Reaktor zuzuführen;
eine sechste Zuführeinrichtung für Kohlendioxid, die dazu ausgebildet ist, Kohlendioxid dem zweiten Reaktor zuzuführen; eine fünfte Abführeinrichtung für Metallcarbonat, die mit der ersten Zuführeinrichtung verbunden ist und dazu ausgebildet ist, das Metallcarbonat aus dem zweiten Reaktor zu entfernen; und
mindestens eine sechste Abführeinrichtung für die weiteren Produkte der Umsetzung von Metall M und Kohlendioxid, die dazu ausgebildet, die Produkte der Umsetzung von Metall M und Kohlendioxid aus dem zweiten Reaktor abzuführen;
bei der die dritte Abführeinrichtung mit der fünften Zuführeinrichtung verbunden ist.

Auch hier ist gemäß bestimmten Ausführungsformen nicht ausgeschlossen, dass mit der dritten Abführeinrichtung für Metall M neben dem Metall M auch andere Feststoffe oder andere Stoffe wie beispielsweise Schmelzhilfsstoffe, nicht umgesetztes Metallchlorid und/oder weitere Umsetzungsprodukte der Elektrolyse entfernt werden, und/oder dass mit der fünften Abführeinrichtung für Metallcarbonat neben dem Metallcarbonat auch andere Feststoffe oder andere Stoffe wie beispielsweise nicht umgesetztes Metall M und/oder weitere Umsetzungsprodukte der Umsetzung von Metall M und Kohlendioxid entfernt werden.

Gemäß bestimmten Ausführungsformen ist die dritte Abführeinrichtung zusätzlich mit der dritten Zuführeinrichung verbunden. Auf diese Weise kann zudem Metall M rezykliert werden, so dass kein oder weniger Zusatz von Metall M zum erfindungsgemäßen Verfahren erforderlich ist. Es ist hierbei jedoch nicht ausgeschlossen, dass weiteres Metall M über eine weitere, separate dritte Zuführeinrichtung oder über dieselbe dritte Zuführeinrichtung dem ersten Reaktor zugeführt wird.

Zudem können der erste und/oder zweite Reaktor und/oder die Elektrolyseeinrichtung auch zusätzliche Einrichtungen wie Kühleinrichtungen, Heizeinrichtungen, Wärmetauscher, Pumpen, etc. umfassen. Auch können solche Einrichtungen an den verschiedenen Zu- und Abführeinrichtungen vorgesehen sein. Die Art und Weise der Zu- und Abführeinrichtungen ist nicht besonders beschränkt und kann geeignet gewählt bzw. vorgesehen werden, beispielsweise als Öffnung, Rost, Gitter, Fallschacht, etc. Die Verbindung zwischen den verschiedenen Zu- und Abführeinrichtungen, wie oben und nachfolgend beispielhaft beschrieben, kann auf geeignete Weise vorgesehen sein, beispielsweise durch Förderbänder, Rohre, etc., aber auch im Sinne von Lagern und geeigneten Transportmöglichkeiten.

Die obigen Ausführungsformen, Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird der Fachmann auch Einzelaspekte als Verbesserungen oder Ergänzungen zu der jeweiligen Grundform der vorliegenden Erfindung hinzufügen.

Ein beispielhafter Prozess für die direkte Chlorierung von Lithiumcarbonat mittels Chlor ist im Folgenden dargestellt. Die Energie für diesen Prozess wird über die Zudosierung von Lithium in den Reaktionsprozess erzeugt. Wie oben gezeigt, liegt die Umwandlungsenergie mit ∼5kJ/mol nur im Prozentbereich der Verbrennungsenthalpien. Dieser Energiebetrag wird daher investiert, um die energieeffiziente Wiederverwertung von Lithiumcarbonat für die Elektrolyse zu gewährleisten. Des Weiteren werden gemäß bestimmten Ausführungsformen keine weiteren Stoffe in den Kreislauf eingeführt, die anschließend wieder abgetrennt werden müssen.

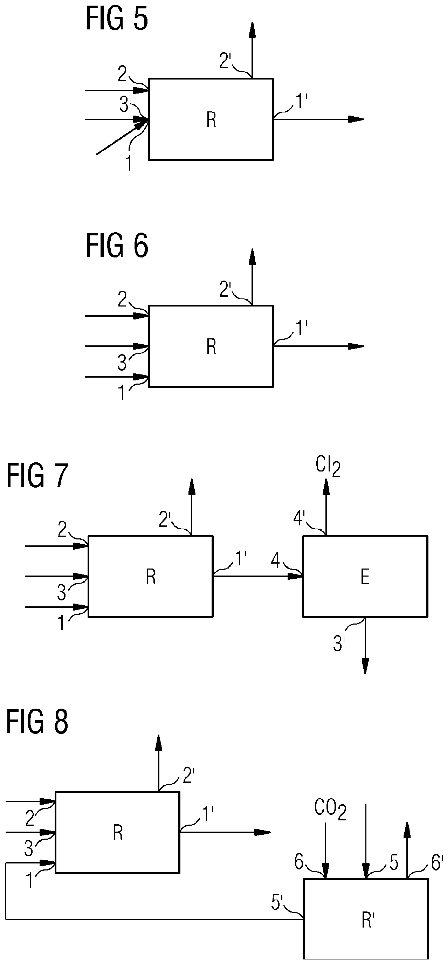

Beispiele für erfindungsgemäße Vorrichtungen sind in den Figuren 5 bis 10 schematisch dargestellt.

In Figur 5 ist eine erste beispielhafte Ausführungsform dargestellt, in der Metallcarbonat über eine erste Zuführeinrichtung 1 für Metallcarbonat und Metall M über eine dritte Zuführeinrichtung 3 für Metall M dem ersten Reaktor R zur Umsetzung von Metallcarbonat als Feststoff mit einem Chlorierungsmittel zu Metallchlorid über eine gemeinsame Öffnung zugeführt werden. Hierbei kann die Vereinigung der Stoffströme der ersten Zuführeinrichtung 1 für Metallcarbonat und der dritten Zuführeinrichtung 3 für Metall M direkt am ersten Reaktor R oder bereits davor erfolgen. Über eine zweite Zuführeinrichtung 2 für das Chlorierungsmittel wird dem ersten Reaktor R zudem das Chlorierungsmittel zugeführt. Aus dem ersten Reaktor R werden dann Metallchlorid über eine erste Abführeinrichtung 1' für Metallchlorid und gasförmige Produkte der Umsetzung von Metallcarbonat und dem Chlorierungsmittel über eine zweite Abführeinrichtung 2' für gasförmige Produkte der Umsetzung von Metallcarbonat und dem Chlorierungsmittel abgeführt.

Eine zweite beispielhafte Ausführungsform ist in Figur 6 dargestellt, in der im Gegensatz zur ersten beispielhaften Ausführungsform das Metallcarbonat über eine erste Zuführeinrichtung 1 für Metallcarbonat und das Metall M über eine dritte Zuführeinrichtung 3 für Metall M dem ersten Reaktor R über getrennte Öffnungen zugeführt werden.

Eine dritte beispielhafte Ausführungsform, welche in Figur 7 dargestellt ist, entspricht der zweiten beispielhaften Ausführungsform, wobei das durch die erste Abführeinrichtung 1' für Metallchlorid abgeführte Metallchlorid über eine vierte Zuführeinrichtung 4 für Metallchlorid einer Elektrolyseeinrichtung E zugeführt wird und dort elektrolysiert wird. Aus der Elektrolyseeinrichtung E werden dann Metall M über eine dritte Abführeinrichtung 3' für Metall M und Chlor über eine vierte Abführeinrichtung 4' für Chlor abgeführt. Es ist bei einer solchen Ausführungsform jedoch nicht ausgeschlossen, dass die Zufuhr von Metallcarbonat und Metall M in den ersten Reaktor R wie in der ersten beispielhaften Ausführungsform erfolgt. Auch ist nicht ausgeschlossen, dass Metallchlorid der Elektrolyseeinrichtung E aus einer anderen Quelle als dem ersten Reaktor R zusätzlich zugeführt wird.

Eine vierte beispielhafte Ausführungsform ist in Figur 8 skizziert und entspricht zunächst wiederum der zweiten Ausführungsform, wobei das über die erste Zuführeinrichtung 1 für Metallcarbonat dem ersten Reaktor R zugeführte Metallcarbonat aus einem zweiten Reaktor R' zur Umsetzung von Metall M mit Kohlendioxid zu Metallcarbonat stammt, aus dem es durch eine fünfte Abführeinrichtung 5' für Metallcarbonat, welche mit der ersten Zuführeinrichtung 1 für Metallcarbonat verbunden ist, abgeführt wird. Zum zweiten Reaktor R' werden Metall M über eine fünfte Zuführeinrichtung 5 für Metall M und Kohlendioxid über eine sechste Zuführeinrichtung 6 für Kohlendioxid zugeführt und zudem weitere Produkte der Umsetzung von Metall und Kohlendioxid über eine sechste Abführeinrichtung 6' für die weiteren Produkte der Umsetzung von Metall M und Kohlendioxid abgeführt. Es ist bei einer solchen Ausführungsform jedoch nicht ausgeschlossen, dass die Zufuhr von Metallcarbonat und Metall M in den ersten Reaktor R wie in der ersten beispielhaften Ausführungsform erfolgt. Auch ist nicht ausgeschlossen, dass dem ersten Reaktor R Metallcarbonat aus einer anderen Quelle als dem zweiten Reaktor R' zusätzlich zugeführt wird.

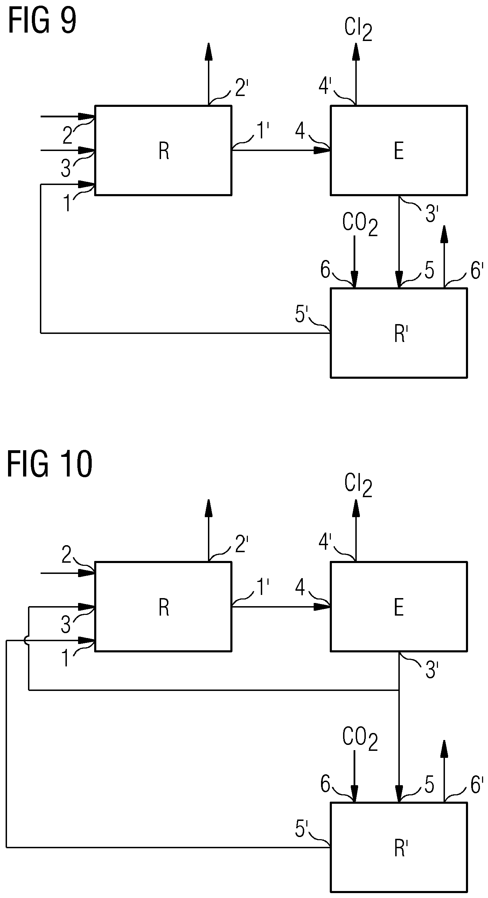

Die in Figur 9 dargestellte beispielhafte fünfte Ausführungsform entspricht zunächst der dritten beispielhaften Ausführungsform, wobei das über die erste Zuführeinrichtung 1 für Metallcarbonat dem ersten Reaktor R zugeführte Metallcarbonat aus einem zweiten Reaktor R' zur Umsetzung von Metall M mit Kohlendioxid zu Metallcarbonat stammt, aus dem es durch eine fünfte Abführeinrichtung 5' für Metallcarbonat, welche mit der ersten Zuführeinrichtung 1 für Metallcarbonat verbunden ist, abgeführt wird. Zum zweiten Reaktor R' werden Metall M über eine fünfte Zuführeinrichtung 5 für Metall M und Kohlendioxid über eine sechste Zuführeinrichtung 6 für Kohlendioxid zugeführt und zudem weitere Produkte der Umsetzung von Metall M und Kohlendioxid über eine sechste Abführeinrichtung 6' für die weiteren Produkte der Umsetzung von Metall M und Kohlendioxid abgeführt. Das im zweiten Reaktor R' umzusetzende Metall M stammt, zumindest teilweise, aus der Elektrolyseeinrichtung E, wobei hier die fünfte Zuführeinrichtung 5 für Metall M mit der dritten Abführeinrichtung 3' für Metall M verbunden ist. Es ist bei einer solchen Ausführungsform jedoch nicht ausgeschlossen, dass die Zufuhr von Metallcarbonat und Metall M in den ersten Reaktor R wie in der ersten beispielhaften Ausführungsform erfolgt. Auch ist nicht ausgeschlossen, dass dem ersten Reaktor R Metallcarbonat aus einer anderen Quelle als dem zweiten Reaktor R' und/oder Metallchlorid der Elektrolyseeinrichtung E aus einer anderen Quelle als dem ersten Reaktor R und/oder Metall M dem zweiten Reaktor R' aus einer anderen Quelle als der Elektrolyseeinrichtung E zusätzlich zugeführt werden.

Eine sechste beispielhafte Ausführungsform ist in Figur 10 dargestellt, welche größtenteils der fünften beispielhaften Ausführungsform entspricht, wobei jedoch ein Teil des Metalls M aus der Elektrolyseeinrichtung E dem ersten Reaktor R zugeführt wird, also die dritte Abführeinrichtung 3' zusätzlich mit der dritten Zuführeinrichtung 3 verbunden ist. Es ist bei einer solchen Ausführungsform jedoch nicht ausgeschlossen, dass die Zufuhr von Metallcarbonat und Metall M in den ersten Reaktor R wie in der ersten beispielhaften Ausführungsform erfolgt. Auch ist nicht ausgeschlossen, dass dem ersten Reaktor R Metallcarbonat aus einer anderen Quelle als dem zweiten Reaktor R' und/oder Metallchlorid der Elektrolyseeinrichtung E aus einer anderen Quelle als dem ersten Reaktor R und/oder Metall M dem zweiten Reaktor R' und/oder dem ersten Reaktor R aus einer anderen Quelle als der Elektrolyseeinrichtung E zusätzlich zugeführt werden.

Die vorliegende Erfindung betrifft ein Verfahren und eine Vorrichtung, bei dem Metallcarbonat, beispielsweise Lithiumcarbonat, mit einem Chlorierungsmittel, beispielsweise Chlor, umgesetzt wird, wobei zusätzlich Metall M, beispielsweise Lithium, zugesetzt wird, um die zur Umsetzung erforderliche Energie bereitzustellen und Kontaminationen und aufwändige Dehydratisierungsschritte zu vermeiden. Das Chlorierungsmittel wird gemäß bestimmten Ausführungsformen aus einer Elektrolyse des Metallchlorids, beispielsweise Lithiumchlorid, und einer ggf. erfolgten Umsetzung zum Chlorierungsmittel bereitgestellt.

Für die Durchführung eines effizienten Metallkreislaufs mit Metallcarbonat ist es bevorzugt, das Abbrandprodukt Metallcarbonat aus einer Umsetzung von Metall M und Kohlendioxid in Metallchlorid für die Elektrolyse wiederaufarbeiten zu können. Erfindungsgemäß wird gemäß bestimmten Ausführungsformen die Metallchlorid-Herstellung durch die direkte Chlorierung von Metallcarbonat unter Verwendung des aus der Elektrolyse stammenden Chlors genutzt.

Beispielhaft ist dies für die Umsetzung von Lithiumcarbonat und Chlor dargestellt:

Li₂CO₃ + Cl₂ → 2LiCl + 1/2O₂ + CO₂ (Reaktionsenthalpie: ∼ 5 kJ/mol)

## Patentansprüche

1. Verfahren zur Herstellung von Metallchlorid M^{x+}Clₓ⁻, bei dem Metallcarbonat als Feststoff mit einem Chlorierungsmittel zu Metallchlorid M^{x+}Clₓ⁻ umgesetzt wird, wobei das Metall M ausgewählt ist aus der Gruppe der Alkalimetalle, Erdalkalimetalle, Al und Zn, bevorzugt Li und Mg, besonders bevorzugt Li, und x der Wertigkeit des Metallkations entspricht, wobei als Edukt zusätzlich Metall M zugesetzt wird, wobei das Metall M von dem des Metallcarbonats verschieden ist oder dem Metall des Metallcarbonats entspricht.

2. Verfahren gemäß Anspruch 1, **dadurch gekennzeichnet, dass** das zusätzlich Metall M in einem Gewichtsverhältnis Metall/Metallcarbonat von weniger als 5/10, bevorzugt weniger als 1/10 und besonders bevorzugt weniger als 0,5/10 zur Erzeugung thermischer Energie eingesetzt wird.

3. Verfahren gemäß Anspruch 2, **dadurch gekennzeichnet, dass** das Metall M zusammen mit dem Metallcarbonat eingesetzt wird.

4. Verfahren gemäß einem der vorgehenden Patentansprüche, **dadurch gekennzeichnet, dass** als Chlorierungsmittel Chlor oder Oxalylchlorid, bevorzugt Chlor, verwendet wird.

5. Verfahren gemäß einem der vorgehenden Patentansprüche, **dadurch gekennzeichnet, dass** das Metallchlorid im Anschluss zu Metall M umgesetzt wird, bevorzugt durch Elektrolyse.

6. Verfahren gemäß Anspruch 5, **dadurch gekennzeichnet, dass** das erzeugte Metall M zumindest teilweise mit Kohlendioxid zu Metallcarbonat umgesetzt wird, so dass ein Metallkreislauf entsteht.

7. Verfahren gemäß einem der vorgehenden Patentansprüche, **dadurch gekennzeichnet, dass** die Umsetzung in einem Rostreaktor oder einem mechanisch bewegten Festbettreaktor oder in einem Zyklon-Reaktor erfolgt.

8. Verfahren gemäß Anspruch 7, **dadurch gekennzeichnet, dass** die Umsetzung in einem Rostreaktor erfolgt, bei dem das Chlorierungsmittel als Gas im Gleichstrom mit dem Metallcarbonat zugegeben wird und/oder das Chlorierungsmittel vorgewärmt wird.

9. Verfahren gemäß Anspruch 7, **dadurch gekennzeichnet, dass** die Umsetzung in einem Zyklon-Reaktor erfolgt, der beheizt wird, und/oder dass Metall M an verschiedenen Positionen im Reaktionsbereich eingebracht wird.

10. Vorrichtung zur Umsetzung von Metallcarbonat als Feststoff mit einem Chlorierungsmittel zu Metallchlorid M^{x+}Clₓ⁻, wobei das Metall M ausgewählt ist aus der Gruppe der Alkalimetalle, Erdalkalimetalle, Al und Zn, bevorzugt Li und Mg, besonders bevorzugt Li, und x der Wertigkeit des Metallkations entspricht, wobei als Edukt zusätzlich Metall M zugesetzt wird, umfassend
einen ersten Reaktor (R) zur Umsetzung von Metallcarbonat und dem Chlorierungsmittel;
eine erste Zuführeinrichtung für Metallcarbonat (1), die dazu ausgebildet ist, Metallcarbonat als Feststoff in den ersten Reaktor (R) einzubringen;
eine zweite Zuführeinrichtung (2) für das Chlorierungsmittel, die dazu ausgebildet ist, das Chlorierungsmittel in den ersten Reaktor (R) einzubringen;
eine erste Abführeinrichtung (1') für Metallchlorid, die dazu ausgebildet ist, Metallchlorid aus dem ersten Reaktor (R) zu entfernen; und
eine zweite Abführeinrichtung für gasförmige Produkte (2') der Umsetzung von Metallcarbonat und dem Chlorierungsmittel, die dazu ausgebildet ist, gasförmige Produkte der Umsetzung von Metallchlorid und dem Chlorierungsmittel aus dem ersten Reaktor (R) zu entfernen,
weiterhin umfassend eine dritte Zuführeinrichtung (3) für Metall M, die dazu ausgebildet ist, Metall M in den ersten Reaktor (R) einzubringen.

11. Vorrichtung gemäß Anspruch 10, **dadurch gekennzeichnet, dass** der erste Reaktor (R) zur Umsetzung von Metallcarbonat und dem Chlorierungsmittel ein Rostreaktor oder ein mechanisch bewegter Festbettreaktor oder ein Zyklon-Reaktor ist.

12. Vorrichtung gemäß Anspruch 10 oder 11, **dadurch gekennzeichnet, dass** die Zufuhr von Metall M und Metallcarbonat in den ersten Reaktor (R) über eine gemeinsame Öffnung im ersten Reaktor erfolgt.

13. Vorrichtung gemäß einem der vorgehenden vorrichtungsbezogenen Patentansprüche, weiterhin umfassend eine Elektrolyseeinrichtung (E) für Metallchlorid, die dazu ausgebildet ist, Metallchlorid zu Metall M und Chlor zu elektrolysieren;
eine vierte Zuführeinrichtung (4) für Metallchlorid, die mit der ersten Abführeinrichtung (1') für Metallchlorid verbunden und dazu ausgebildet ist, das Metallchlorid der Elektrolyseeinrichtung (E) zuzuführen;
eine dritte Abführeinrichtung (3') für Metall M, die dazu ausgebildet ist, Metall M aus der Elektrolyseeinrichtung (E) zu entfernen;
und eine vierte Abführeinrichtung (4') für Chlor, die dazu ausgebildet ist, Chlor aus der Elektrolyseeinrichtung (E) zu entfernen.

14. Vorrichtung gemäß einem der vorgehenden vorrichtungsbezogenen Patentansprüche, weiterhin umfassend
einen zweiten Reaktor (R') zur Umsetzung von Metall M mit Kohlendioxid zu Metallcarbonat, der dazu ausgebildet ist, Metall M mit Kohlendioxid umzusetzen;
eine fünfte Zuführeinrichtung (5) für Metall M, die dazu ausgebildet ist, Metall M dem zweiten Reaktor (R') zuzuführen; eine sechste Zuführeinrichtung (6) für Kohlendioxid, die dazu ausgebildet ist, Kohlendioxid dem zweiten Reaktor (R') zuzuführen;
eine fünfte Abführeinrichtung (5') für Metallcarbonat, die mit der ersten Zuführeinrichtung (1) verbunden ist und dazu ausgebildet ist, das Metallcarbonat aus dem zweiten Reaktor (R') zu entfernen; und
mindestens eine sechste Abführeinrichtung (6') für die weiteren Produkte der Umsetzung von Metall M und Kohlendioxid, die dazu ausgebildet, die Produkte der Umsetzung von Metall M und Kohlendioxid aus dem zweiten Reaktor (R') abzuführen.

15. Vorrichtung gemäß einem der Patentansprüche 10 bis 12, weiterhin umfassend eine Elektrolyseeinrichtung (E) für Metallchlorid, die dazu ausgebildet ist, Metallchlorid zu Metall M und Chlor zu elektrolysieren;
eine vierte Zuführeinrichtung (4) von Metallchlorid, die mit der ersten Abführeinrichtung (1') für Metallchlorid verbunden ist und dazu ausgebildet ist, das Metallchlorid der Elektrolyseeinrichtung zuzuführen;
eine dritte Abführeinrichtung (3') für Metall M, die dazu ausgebildet ist, Metall M aus der Elektrolyseeinrichtung (E) zu entfernen;
eine vierte Abführeinrichtung (4') für Chlor, die dazu ausgebildet ist, Chlor aus der Elektrolyseeinrichtung (E) zu entfernen;
einen zweiten Reaktor (R') zur Umsetzung von Metall M mit Kohlendioxid zu Metallcarbonat, der dazu ausgebildet ist, Metall M mit Kohlendioxid umzusetzen;
eine fünfte Zuführeinrichtung (5) für Metall M, die dazu ausgebildet ist, Metall M dem zweiten Reaktor (R') zuzuführen;
eine sechste Zuführeinrichtung (6) für Kohlendioxid, die dazu ausgebildet ist, Kohlendioxid dem zweiten Reaktor (R') zuzuführen;
eine fünfte Abführeinrichtung (5') für Metallcarbonat, die mit der ersten Zuführeinrichtung (1) verbunden ist und dazu ausgebildet ist, das Metallcarbonat aus dem zweiten Reaktor (R') zu entfernen; und
mindestens eine sechste Abführeinrichtung (6) für die weiteren Produkte der Umsetzung von Metall M und Kohlendioxid, die dazu ausgebildet, die Produkte der Umsetzung von Metall M und Kohlendioxid aus dem zweiten Reaktor (R') abzuführen;
bei der die dritte Abführeinrichtung (3') mit der fünften Zuführeinrichtung (5) verbunden ist, wobei bevorzugt die dritte Abführeinrichtung (3') zusätzlich mit der dritten Zuführeinrichtung (3) verbunden ist.

## Claims

1. Method for producing metal chloride M^{x+}Clₓ⁻, wherein metal carbonate as solid is reacted with a chlorinating agent to give metal chloride M^{x+}Clₓ⁻, the metal M being selected from the group of the alkali metals, alkaline earth metals, Al and Zn, preferably Li and Mg, more preferably Li, and x corresponding to the valence of the metal cation, metal M additionally being added as reactant, wherein the metal M is different from that of the metal carbonate or corresponds to that metal of the metal carbonate.

2. Method according to Claim 1, **characterized in that** additionally metal M is used in a metal/metal carbonate weight ratio of less than 5/10, preferably less than 1/10, and more preferably less than 0.5/10, in order to generate thermal energy.

3. Method according to Claim 2, **characterized in that** the metal M is used together with the metal carbonate.

4. Method according to any of the preceding claims, **characterized in that** chlorine or oxalyl chloride, preferably chlorine, is used as chlorinating agent.

5. Method according to any of the preceding claims, **characterized in that** the metal chloride is subsequently reacted to give metal M, preferably electrolysis.

6. Method according to Claim 5, **characterized in that** the metal M produced is reacted at least partly with carbon dioxide to give metal carbonate, to form a metal circuit.

7. Method according to any of the preceding claims, **characterized in that** the reaction takes place in a grid reactor or a mechanically moved fixed-bed reactor or in a cyclone reactor.

8. Method according to Claim 7, **characterized in that** the reaction takes place in a grid reactor, in which the chlorinating agent is added as a gas in cocurrent with the metal carbonate and/or the chlorinating agent is preheated.

9. Method according to Claim 7, **characterized in that** the reaction takes place in a cyclone reactor, which is heated, and/or **in that** metal M is introduced at different positions in the reaction region.

10. Apparatus for reacting metal carbonate as solid with a chlorinating agent to give metal chloride M^{x+}Clₓ⁻, the metal M being selected from the group of the alkali metals, alkaline earth metals, Al and Zn, preferably Li and Mg, more preferably Li, and x corresponding to the valence of the metal cation, metal M additionally being added as reactant, comprising
a first reactor (R) for the reaction of metal carbonate and the chlorinating agent;
a first supply means for metal carbonate (1), designed to introduce metal carbonate as solid into the first reactor (R);
a second supply means (2) for the chlorinating agent, designed to introduce the chlorinating agent into the first reactor (R);
a first discharge means (1') for metal chloride, designed to remove metal chloride from the first reactor (R); and
a second discharge means for gaseous products (2') of the reaction of metal carbonate and the chlorinating agent, designed to remove gaseous products of the reaction of metal carbonate and the chlorinating agent from the first reactor (R),
further comprising a third supply means (3) for metal M, designed to introduce metal M into the first reactor (R).

11. Apparatus according to Claim 10, **characterized in that** the first reactor (R) for the reaction of metal carbonate and the chlorinating agent is a grid reactor or a mechanically moved fixed-bed reactor or a cyclone reactor.

12. Apparatus according to Claim 10 or 11, **characterized in that** the supply of metal M and metal carbonate into the first reactor (R) takes place via a common opening in the first reactor.

13. Apparatus according to any of the preceding apparatus claims, further comprising an electrolysis means (E) for metal chloride, designed to electrolyze metal chloride to give metal M and chlorine;
a fourth supply means (4) for metal chloride, connected to the first discharge means (1') for metal chloride and designed to supply the metal chloride to the electrolysis means (E);
a third discharge means (3') for metal M, designed to remove metal M from the electrolysis means (E);
and a fourth discharge means (4') for chlorine, designed to remove chlorine from the electrolysis means (E).

14. Apparatus according to any of the preceding apparatus claims, further comprising
a second reactor (R') for the reaction of metal M with carbon dioxide to give metal carbonate, designed to react metal M with carbon dioxide;
a fifth supply means (5) for metal M, designed to supply metal M to the second reactor (R');
a sixth supply (6) means for carbon dioxide, designed to supply carbon dioxide to the second reactor (R');
a fifth discharge means (5') for metal carbonate, connected to the first supply means (1) and designed to remove metal carbonate from the second reactor (R'); and
at least one sixth discharge means (6')for the further products of the reaction of metal M and carbon dioxide, designed to discharge the products of the reaction of metal M and carbon dioxide from the second reactor (R').

15. Apparatus according to any of Claims 10 to 12, further comprising an electrolysis means (E) for metal chloride, designed to electrolyze metal chloride to give metal M and chlorine;
a fourth supply means (4) of metal chloride, connected to the first discharge means (1') for metal chloride and designed to supply the metal chloride to the electrolysis means;
a third discharge means (3') for metal M, designed to remove metal M from the electrolysis means (E);
a fourth discharge means (4');for chlorine, designed to remove chlorine from the electrolysis means (E);
a second reactor (R') for the reaction of metal M with carbon dioxide to give metal carbonate, designed to react metal M with carbon dioxide;
a fifth supply means (5) for metal M, designed to supply metal M to the second reactor (R');
a sixth supply (6) means for carbon dioxide, designed to supply carbon dioxide to the second reactor (R');
a fifth discharge means (5') for metal carbonate, connected to the first supply means (1) and designed to remove metal carbonate from the second reactor (R'); and
at least one sixth discharge means (6) for the further products of the reaction of metal M and carbon dioxide, designed to discharge the products of the reaction of metal M and carbon dioxide from the second reactor (R'); wherein the third discharge means (3') is connected to the fifth supply means (5), wherein the third discharge means (3') is preferably additionally connected to the third supply means (3).

## Revendications

1. Procédé de production de chlorure de métal M^{x+}Clₓ⁻, par lequel on transforme du carbonate de métal sous forme de matière solide par un agent de chloruration en du chlorure de métal M^{x+}Clₓ⁻, le métal étant choisi dans le groupe des métaux alcalins, des métaux alcalino-terreux, Al et Zn, de préférence Li et Mg, d'une manière particulièrement préférée Li, et x correspond à la valence du cation métallique, dans lequel on ajoute comme éduit supplémentairement du métal M, le métal M étant différent de celui du carbonate de métal ou correspondant au métal du carbonate de métal.

2. Procédé suivant la revendication 1, **caractérisé en ce que** l'on utilise le métal M supplémentairement en un rapport en poids métal/carbonate de métal de moins de 5/10, de préférence de moins de 1/10 et, d'une manière préférée, de moins 0,5/10 pour produire de l'énergie thermique.

3. Procédé suivant la revendication 2, **caractérisé en ce que** l'on utilise le métal M ensemble avec le carbonate de métal.

4. Procédé suivant l'une des revendications précédentes, **caractérisé en ce que** l'on utilise comme agent de chloruration du chlore ou du chlorure d'oxalyle, de préférence du chlore.

5. Procédé suivant l'une des revendications précédentes, **caractérisé en ce que** l'on transforme le chlorure de métal ensuite en métal M, de préférence par électrolyse.

6. Procédé suivant la revendication 5, **caractérisé en ce que** l'on transforme le métal M produit, au moins en partie, par du dioxyde de carbone en du carbonate de métal, de manière à créer un circuit de métal.

7. Procédé suivant l'une des revendications précédentes, **caractérisé en ce que** la transformation s'effectue dans un réacteur à grille ou dans un réacteur à lit fixe déplacé mécaniquement ou dans un réacteur cyclone.

8. Procédé suivant la revendication 7, **caractérisé en ce que** la transformation s'effectue dans un réacteur à grille, dans lequel on ajoute l'agent de chloruration sous la forme d'un gaz en courant continu avec le carbonate de métal et/on préchauffe l'agent de chloruration.

9. Procédé suivant la revendication 7, **caractérisé en ce que** la transformation s'effectue dans un réacteur cyclone que l'on chauffe et/ou on introduit le métal M en des positions différentes dans la zone de réaction.

10. Installation de transformation de carbonate de métal sous forme de matière solide par un agent de chloruration en du chlorure de métal M^{x+}Clₓ⁻, dans lequel le métal étant choisi dans le groupe des métaux alcalins, des métaux alcalino-terreux, Al et Zn, de préférence Li et Mg, d'une manière particulièrement préférée Li, et x correspond à la valence du cation métallique, dans lequel on ajoute comme éduit supplémentairement du métal M, comprenant
un premier réacteur (R) pour la réaction du carbonate de métal et de l'agent de chloruration;
un premier dispositif d'apport du carbonate (1) de métal, constitué pour introduire du carbonate de métal comme matière solide dans le premier réacteur (R);
un deuxième dispositif (2) d'apport de l'agent de chloruration, constitué pour introduire l'agent de chloruration dans le premier réacteur (R);
un premier dispositif (1') d'évacuation du chlorure de métal, constitué pour retirer le chlorure de métal du premier réacteur (R) et
un deuxième dispositif d'évacuation de produits (2') gazeux de la réaction du carbonate de métal et de l'agent de chloruration, constitué pour retirer des produits gazeux de la réaction du chlorure de métal et de l'agent de chloruration du premier réacteur (R),
comprenant, en outre, un troisième dispositif (3) d'apport de métal M, constitué pour introduire du métal (M) dans le premier réacteur (R).

11. Installation suivant la revendication 10, **caractérisée en ce que** le premier réacteur (R) de réaction de carbonate de métal et de l'agent de chloruration est un réacteur à grille ou un réacteur à lit fixe déplacé mécaniquement ou un réacteur cyclone.

12. Installation suivant la revendication 10 ou 11, **caractérisée en ce que** l'apport de métal M et de carbonate de métal dans le premier réacteur (R) s'effectue par une ouverture commune du premier réacteur.

13. Installation suivant l'une des revendications précédentes d'installation, comprenant, en outre, un dispositif (E) d'électrolyse du chlorure de métal, constitué pour électrolyser le chlorure de métal en métal et en chlore;
un quatrième dispositif (4) d'apport de chlorure de métal communiquant avec le premier dispositif (1') d'évacuation de chlorure de métal et constitué pour apporter des chlorures de métal au dispositif (E) d'électrolyse;
un troisième dispositif (3') d'évacuation de métal M, constitué pour retirer du métal M du dispositif (E) d'électrolyse;
et un quatrième dispositif (4') d'évacuation de chlore, constitué pour retirer du chlore du dispositif (E) d'électrolyse.

14. Installation suivant l'une des revendications précédentes d'installation, comprenant, en outre,
un deuxième réacteur (R') pour transformer du métal M par du dioxyde de carbone en du carbonate de métal, constitué pour faire réagir du métal M sur du dioxyde de carbone;
un cinquième dispositif (5) d'apport de métal M, constitué pour apporter du métal M au deuxième réacteur (R');
un sixième dispositif (6) d'apport de dioxyde de carbone, constitué pour apporter du dioxyde de carbone au deuxième réacteur (R');
un cinquième dispositif (5') d'évacuation de carbonate de métal, qui communique avec le premier dispositif (1) d'apport et qui est constitué pour retirer du carbonate de métal du deuxième réacteur (R') et
au moins un sixième dispositif (6') d'évacuation d'autres produits de la réaction du métal et du dioxyde de carbone, constitué pour évacuer du deuxième réacteur (R') les produits de la réaction du métal M et du dioxyde de carbone.

15. Installation suivant l'une des revendications 10 à 12, comprenant, en outre, un dispositif (E) d'électrolyse de chlorure de métal, constitué pour électrolyser du chlorure de métal en métal et en chlore;
un quatrième dispositif (4) d'apport de chlorure de métal, qui communique avec le premier dispositif (1') d'évacuation de chlorure de métal et qui est constitué pour apporter du chlorure de métal au dispositif d'électrolyse;
un troisième dispositif (3') d'évacuation de métal M, constitué pour retirer du métal M du dispositif (E) d'électrolyse;
un quatrième dispositif (4') d'évacuation de chlore, constitué pour retirer du chlore du dispositif (E) d'électrolyse;
un deuxième réacteur (R') pour transformer du métal M par du dioxyde de carbone en carbonate de métal, constitué pour faire réagir du métal sur du dioxyde de carbone;
un cinquième dispositif (5) d'apport de métal M, constitué pour apporter du métal M au deuxième réacteur (R');
un sixième dispositif (6) d'apport de dioxyde de carbone, constitué pour apporter du dioxyde de carbone au deuxième réacteur (R');
un cinquième dispositif (5') d'évacuation de carbonate de métal, qui communique avec le premier dispositif (1) d'apport et qui est constitué pour retirer du carbonate de métal du deuxième réacteur (R') et
au moins un sixième dispositif (6) d'évacuation d'autres produits de la réaction du métal M et du dioxyde de carbone, constitué pour évacuer du deuxième réacteur (R') les produits de la réaction du métal M et du dioxyde de carbone; dans lequel le troisième dispositif (3') d'évacuation communique avec le cinquième dispositif (5) d'apport, dans lequel, de préférence, le troisième dispositif (3') d'évacuation communique supplémentairement avec le troisième dispositif (3) d'apport.
